# EUROPEAN PATENT APPLICATION

(11) **EP 2 339 739 A1**
(43) Date of publication of application: **29.06.2011**
(21) Application number: 09806909.9
(22) Date of filing: 24.07.2009
(51) Int. Cl.: H02M 7/493

(54) **AC SIGNAL CONVERTER**

(30) Priority: 30.09.2008 RU 2008138631
(71) Applicant: Zakharov, Igor Vladislavovich, Moscow 115582 (RU); PILKIN, Vitaly Evgenievich, Moscow, 127081 (RU)
(72) Inventor: Zakharov, Igor Vladislavovich, Moscow 115582 (RU)
(74) Representative: Klemm, Rolf
(86) International application number: PCT/RU2009/000373
(87) International publication number: WO 2010/019076

(57) **Abstract**

The invention relates to AC signal converters. The AC signal converter, comprising connected cascades of amplification and conversion of the AC signal and two or more DC power supply sources, has a direct connection of the load with the output and includes connected cascades of amplification and conversion of the AC signal from the rectangular signal into the signal of any specified waveform; cascades of amplification and conversion of the AC signal converter are supplied by one DC voltage supply source which is common for one or any or all cascades of amplification and conversion or by two or more DC voltage supply sources, each of them supplies its own cascade of amplification and conversion of the AC signal with its own voltage supply estimated according to the waveform of the specified output signal of its individual cascade of amplification and conversion of the AC signal.

## Description

### CROSS-REFERENCE TO RELATED APPLICATIONS

This application is a European national stage application of a PCT application PCT/RU2009/000373 filed on 24 July 2009, whose disclosure is incorporated herein in its entirety by reference, which PCT application claims priority of a Russian Federation application RU2008138631 filed on 30 September 2008.

### FIELD OF THE INVENTION

The present invention relates to electric- and radiotechnics, particularly to alternating current (AC) signal converters and it can be used for AC-voltage power supply of any specified waveform of signal and for other purposes.

### BACKGROUND OF THE INVENTION

It is known the AC signal converter which includes connected in parallel cascades of AC signal amplification and the direct current (DC) power supply source ("Radiolyubitel"', #6, 1999, p.24). The disadvantages of the given converter are its low margin of safety because the breakdown of DC power supply source leads to failure of running of the whole amplifier, and its power output being limited by power characteristics of active elements (transistors, lamps, etc.) on which it is built.

It is known also the AC signal amplification in result of flow method application using pair-amplifiers (European patent EP 0474 930 B1). The disadvantage of this device is that resistors are connected in series with the output to ensure similar load of each amplifier and to compensate difference of parameters between amplifiers and power supplies. These resistors have different values and adjusted individually. This leads to a decrease in power and difficult device adjustment.

It is known also the patent SU 877781. The main disadvantages of this invention are: 1) it can only be used in stand-alone current inverters in which a transformer is not used at the output working in parallel and feeding from the common DC power supply source, it does not change the signal amplitude and its output signal has a rectangular waveform only; 2) the optimal parameters of each cascade of amplification and conversion are reached by balancing the current between inverter gate groups, but the difference between the optimal parameters of cascades of amplification and conversion remains. Thus, in this invention load at one or more cascades of amplification and conversion at total nominal load may be higher than the maximum due to the difference of parameters of AC signal cascades of amplification and conversion, leading to failure of cascade(s), but this invention cannot stabilize and redistribute the load between cascades of amplification and conversion. When increasing the power beyond all bounds due to increasing the number of cascades of amplification and conversion the load at one or more of these cascades inevitably becomes higher than the maximum, so this invention cannot increase the power beyond all bounds due to increasing the number of cascades of amplification and conversion.

It is known the AC signal converter according to the patent application US 2004/0233590. This converter has the following main disadvantages: 1) maximum power of the converter is limited by two cascades of amplification and conversion; 2) its output waveform amplitude cannot be more than the supply voltage amplitude; 3) load is not connected directly to the converter output; 4) there is no output voltage stabilization.

The most relevant in terms of technical essence (a prototype) is the AC signal converter protected by the patent of the Russian Federation for the utility model #70731, where the same signal is amplified by several identical cascades of amplification with same functions, which are paralleled to the input and through the transformer to the output. The disadvantage of the prototype is that the power exceeding 700 Wt is generated in it by rectangular signal (i.e. signal which has waveform of rectangle), for it is difficult to amplify a sinusoidal or any other signal (except for rectangular signal) to the given power (of over 700 Wt) due to the losses in power, heat, resistance of elements, characteristics of elements and complicity of the scheme.

The proposed AC signal converter is deprived of these disadvantages because the output signal of the specified waveform consists of several rectangular signals. It also differs from the prototype due to the fact that it generates rectangular signal on its own and transfers it to the inputs of cascades of amplification and conversion, while at cascades of amplification and conversion rectangular signals are changed in terms of duration and amplitude. Cascades of amplification and conversion have both the same and different parameters of conversion in terms of duration and amplitude. Then rectangular signals are summed into a signal of any specified or close to any specified waveform. The signal of any specified waveform does not differ by technical characteristics from the signal close to any specified waveform, used for power supply. Furthermore, the proposed AC signal converter with its existing schemes automatically redistributes the load at cascades of amplification and conversion. So it becomes possible to increase power beyond all bounds. That is, the proposed AC signal converter does not reach the optimal parameters of each cascade of amplification and conversion, but due to its protection, coordination and stabilization schemes it does not allow that the load as well the power at any cascade of amplification and conversion was higher than the maximum value for cascade or cascades, so cascade or cascades of amplification and conversion may have different characteristics. The power above the maximum value allowed for this cascade or these cascades is automatically redistributed to cascades of amplification and conversion which power is below the maximum. Dynamic current balancing (dynamic parameters) is not required because each output element of the proposed converter is connected to its own transformer winding and power supply.

### OBJECT AND BRIEF DESCRIPTION OF THE INVENTION

The proposed AC signal converter remains operational during the breakdown of one or all but one DC power supply sources and provides the opportunity of the unlimited growth of its output power due to the increase of the number of cascades of amplification and conversion and DC power supply sources. The input AC signal of rectangular waveform is conversed into the signal of any specified or close to any specified waveform (a sinus, a saw, etc) at cascades of amplification and conversion, at the matching output element, at the outputs of cascades of amplification and conversion, at the matching output element (transformer) or matching output elements (transformers), while to the load of the proposed AC signal converter optimal for this load AC signal is transferred. The proposed AC signal converter is characterized by high efficiency, low losses of heat and power, and low cost.

The specified technical result is reached by that the AC signal converter, comprising N connected cascades of amplification and conversion of the AC signal (where N is the natural number) and DC power supply source, which serves as power unit for one of cascades of amplification and conversion of the AC signal, has N number of DC power supply sources.

The technical result of conversion of the AC rectangular signal into a signal of any specified or close to the any specified form is achieved due to three principles of work of the AC signal converter, whereas the elements included into the given converter may vary.

The given technical result is achieved also by the following: every cascade of amplification and conversion by form of the specified output signal converts the AC signal in terms of duration and amplitude, while at the common output or at the output of the output element (for example, a transformer) is formed the signal of any specified or close to any specified form.

The given technical result is achieved also by the following: every cascade of amplification and conversion transforms the input AC signal in terms of duration, whereas the transformation of the signal in terms of duration takes place according to the form of the specified output signal. Then AC signals formed at cascades of amplification and conversion are transferred to primary windings of the output matching element (a transformer). At the output matching element (a transformer) the number of winds at primary windings is estimated according to the form of the specified output signal. For this reason at secondary winding the amplitude of AC signals is also formed according to the form of the specified output signal. At secondary winding AC signals are summed and at the output of the AC signal converter there appears AC signal of any specified or close to specified form. As one of the options of the proposed invention, instead of several primary windings one winding can be used with several outputs.

The given technical result is also achieved by the following: every cascade of amplification and conversion transforms the input AC signal in terms of duration. The transformation of the AC signal in terms of duration takes place according to the form of the specified output signal. Then AC signals formed at the cascades of amplification and conversion are transferred to primary windings of the output matching elements (transformers).

At the output matching elements (transformers) due to amplification (transformation) AC signals are amplified in terms of amplitude or in terms of both power and amplitude. Amplification (transformation) of the output matching elements (transformers) takes place according to the form of the specified output signal, therefore at the integrated secondary windings amplitude of AC signals formed at the cascades of amplification and conversion will be also changed according to the form of the specified output signal. At the integrated secondary windings AC signals are summed and at the output of the AC signal converter there appears the AC signal of any specified or close to specified form.

The given technical result is also achieved by the fact that every cascade of amplification and conversion transforms the AC rectangular signal in terms of duration. Transformation of the signal in terms of duration is carried out according to the form of the specified output signal. At the power sources there is the DC voltage estimated according to the form of the specified output signal. That is why AC rectangular signals formed at the cascades of amplification and conversion in terms of amplitude will be also changed according to the form of the specified output signal. Then AC rectangular signals formed at the cascades of amplification and conversion are transferred to primary windings of output element(s) (transformer(s)). The output element (a transformer) has equal number of winds at the primary winding. Output elements (transformers) have equal amplification (transformation). Then at the secondary winding or at the integrated secondary windings and at the output of the AC signal converter there appears the AC signal of any specified or close to specified form. In this case, upon breakdown of one or all but one power sources the output signal will be corrupted.

The given technical result is achieved also by the fact that upon breakdown of one or several or all but one power supply sources of cascades of amplification and conversion the power supply of these cascades is switched to the not failed power supply source(s).

The given technical result is achieved also by the following: into the AC signal converter are entered schemes, which automatically redistribute the load at cascades of amplification and conversion.

Generation of the sinusoidal signal at the known AC signal converters is achieved by the dual conversion of frequency and modulation, which leads to large power losses and to the increase cost of the known converters. The proposed AC signal converter does not have these drawbacks because it generates only the frequency which is transferred to the load of the AC signal converter.

The given technical result is achieved also by the following: two or more cascades of amplification of the AC signal include output matching elements (transformers) which work with each cascade of amplification and conversion and have integrated secondary windings or a common transformer with several primary windings where each primary winding is connected with its cascade of amplification and conversion.

### BRIEF DESCRIPTION OF DRAWINGS OF THE INVENTION

FIG. 1, FIG. 2, FIG. 3 show functional electrical schemes of, for example, a three-cascade AC signal converter which explain the essence of the invention.

FIG. 1A, FIG. 2A, FIG. 3A show structural electrical schemes of, for example, a three-cascade AC signal converter which explain the principle of its operation.

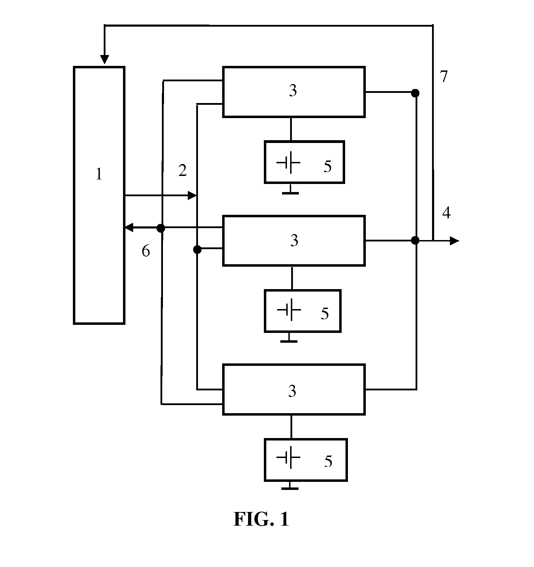

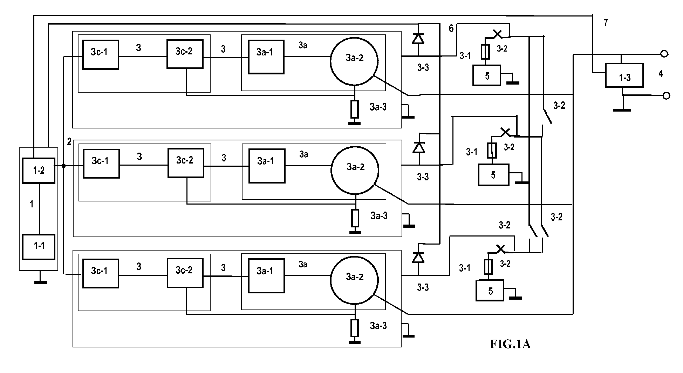

FIG. 1 shows the variant of a three-cascade AC signal converter with a common output of cascades of amplification and conversion.

FIG. 1A shows the principle of operation of a three-cascade AC signal converter with a common output of cascades of amplification and conversion.

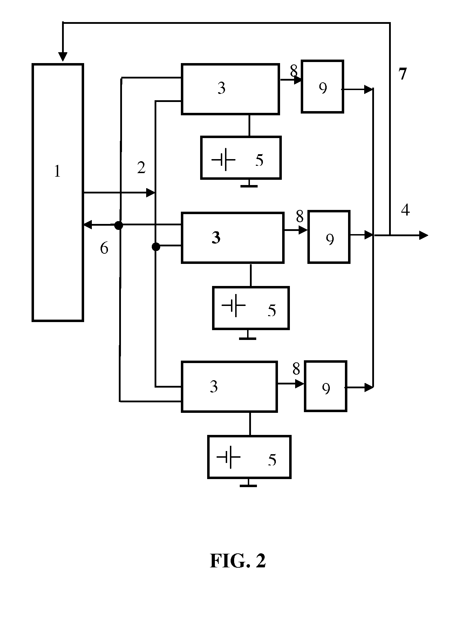

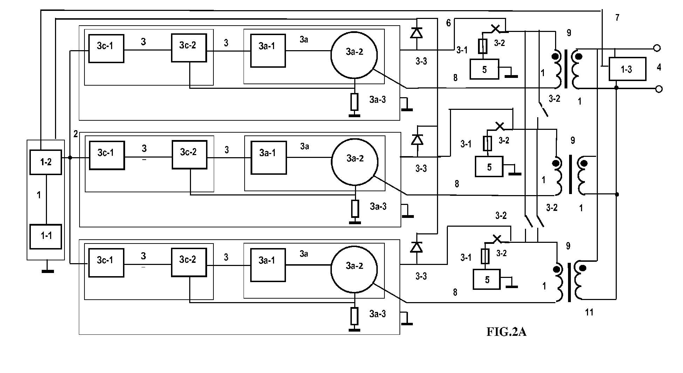

FIG. 2 shows the variant of a three-cascade AC signal converter with the output elements (transformers), each of which is connected to its cascade of amplification and conversion and united at the output.

FIG. 2A shows the principle of operation of s three-cascade AC signal converter with the output elements (transformers), each of which is connected to its cascade of amplification and conversion and united at the output.

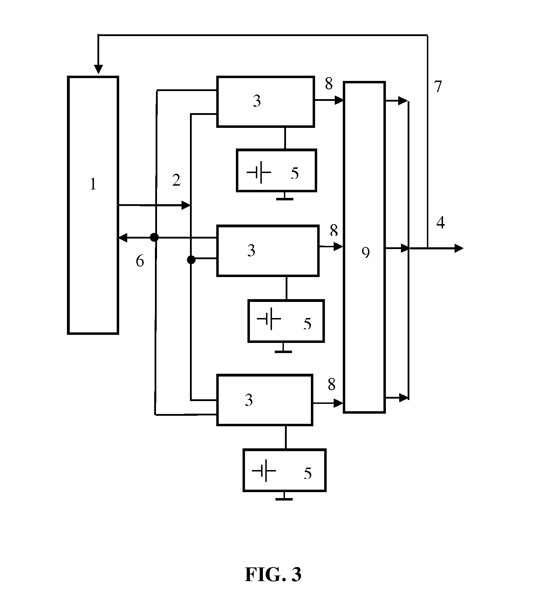

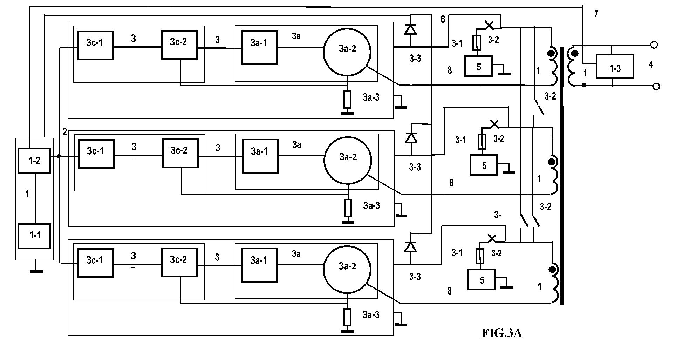

FIG. 3 shows the variant of a three-cascade AC signal converter with a common matching output element (a transformer).

FIG. 3A shows the principle of operation of a three-cascade AC signal converter with a common matching output element (a transformer).

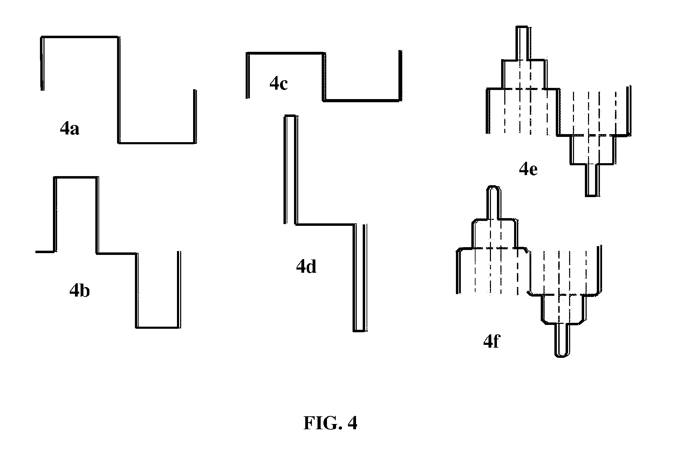

FIG. 4 shows the amplification and conversion of the AC signal.

### DETAIL DESCRIPTION OF PREFERRED EMBODIMENTS OF THE INVENTION

**FIG. 1** shows the variant with a common output of cascades of amplification and conversion, which has several principles of operation.

*Principle 1.* The AC rectangular signal there is generated at the block 1. The specified AC rectangular signal comes to inputs 2 of cascades of amplification and conversion 3, at which it is transformed according to the waveform of the specified output signal in terms of duration and amplitude and it is equally amplified in terms of power. At the output 4 AC signals formed at cascades of amplification and conversion 3 are summed, and there appears signal of any or close to any specified waveform. Power supply of block 1 is carried out from power supply sources 5 through the united power supply input 6. Power supply of cascades of amplification and conversion 3 is carried out from power supply sources 5 with equal voltage. From the output 4 through connection 7 the feedback signal is transferred to the block 1 for stabilization of the AC signal at the output 4.

*Principle 2.* Principle 2 differs from Principle 1 by the following: the AC rectangular signal at cascades of amplification and conversion is transformed only in terms of duration, while power supply of cascades of amplification and conversion 3 is carried out from power supply sources 5 with voltage estimated according to the waveform of the specified output signal, therefore, the amplitude of AC rectangular signals formed at cascades of amplification and conversion 3 will be also changed according to the waveform of the specified output signal. Then at the output 4 there appears the AC signal of any specified waveform.

**FIG. 2** shows the variant of a three-cascade AC signal converter with the output elements (transformers), each of which is connected to its cascade of amplification and conversion and integrated at the output with all other output elements (transformers). The given variant has several principles of operation.

*Principle 1.* The AC rectangular signal is generated at block 1. The specified AC rectangular signal comes to the inputs 2 of cascades of amplification and conversion 3, at which it is transformed in terms of duration and amplitude and it is equally amplified in terms of power. The transformation of the signal in terms of duration and amplitude is carried out according to the waveform of the specified output signal. Through connection 8 AC signals formed at cascades of amplification and conversion 3 are transferred to output elements (transformers) 9 with equal amplification. At the output 4 output elements (transformers) 9 are connected to each other by means of secondary windings (not indicated on **FIG. 2**). AC signals formed at cascades of amplification and conversion 3 are summed at the output 4, and there appears signal of any specified waveform. Power supply of block 1 is carried out from the united power supply input 6. Power supply of cascades of amplification and conversion 3 is carried out from power supply sources 5 with equal voltage. From the output 4 through the connection 7 the feedback signal is transferred to the block 1 for stabilization of the AC signal at the output 4.

*Principle 2.* Principle 2 differs from Principle 1 by the following: the AC rectangular signal at cascades of amplification and conversion is transformed only in terms of duration, while matching output elements (transformers) 9 have amplitude amplification parameters specified according to the waveform of the output signal. At the output 4 the output elements (transformers) 9 are connected to each other by means of secondary windings 11 and AC signals formed at cascades of amplification and conversion 3 are summed at the output 4, and there appears a signal of any specified waveform.

*Principle 3.* Principle 3 differs from Principles 1 and 2 by the following: the AC rectangular signal at cascades of amplification and conversion is transformed only in terms of duration, while power supply of cascades of amplification is carried out from power supply sources 5 with the voltage estimated according to the waveform of the specified output signal, therefore, the amplitude of AC rectangular signals formed at cascades of amplification and conversion 3 will be also changed according to the waveform of the specified output signal. Then AC rectangular signals formed at cascades of amplification and conversion 3 and at output elements (transformers) 9 are summed at the output 4 and there appears signal of any specified waveform. Meanwhile output elements (transformers) 9 have equal amplification (transformation).

FIG. 3 shows the variant of a three-cascade AC signal converter with a common matching output element (a transformer), which has several principles of operation.

*Principle 1.* The AC rectangular signal is generated at block 1. The specified AC rectangular signal comes to the inputs 2 of cascades of amplification and conversion 3, at which according to the waveform of the specified output signal it is transformed in terms of duration and amplitude and it is equally amplified in terms of power. Through connection 8 AC signals formed at cascades of amplification and conversion 3 are transferred to primary windings (not indicated on Figure 3) of output elements (transformers) 9 with equal number of winds on primary windings (not indicated on **FIG. 3**). At the secondary winding (not indicated on **FIG. 3**) of the output element (a transformer) 9 and at the output 4 AC signals formed at cascades of amplification and conversion 3 are summed and there appears signal of any specified waveform. Power supply of block 1 is carried out from power supply sources 5 through connection 6. Power supply of cascades of amplification and conversion is carried out from power supply sources 5 with equal voltage. From the output 4 through the connection 7 the feedback signal is transferred to the block 1 for stabilization of AC signal at the output 4.

*Principle 2.* Principle 2 differs from Principle 1 by the following: the AC rectangular signal, which is transferred to inputs 2 of cascades of amplification and conversion 3, is transformed only in terms of duration and is amplified in terms of power. Through connection 8 AC signals formed at cascades of amplification and conversion 3 are transferred to primary windings (not indicated on **FIG. 3**) of matching output element (a transformer) with number of winds estimated according to the waveform of the specified output signal, therefore, AC signals formed at cascades of amplification and conversion 3 at the output element (a transformer) 9 are amplified in terms of amplitude also according to the waveform of the specified output signal.

*Principle 3.* Principle 3 differs from Principles 1 and 2 by the following: the AC rectangular signal at cascades of amplification and conversion 3 is transformed only in terms of duration and is amplified in terms of power. Power supply of cascades of amplification and conversion is carried out from power supply sources 5 with voltage estimated according to the waveform of the specified output signal, therefore, the amplitude of AC rectangular signals at connections 8 is also formed according to the waveform of the specified output signal. Meanwhile the output element (a transformer) 9 has equal number of winds on primary windings (not indicated on **FIG. 3**).

**FIG. 1A** shows the principle of operation of a three-cascade AC signal converter with a common output of cascades of amplification and conversion, which includes the following elements: block 1 (generator-multivibrator) consisting of schemes 1-1, 1-2, 1-3, cascades of amplification and conversion 2 consisting of blocks of conversion 3c and blocks of amplification 3a, diodes 3-3, safety devices 3-1, and switches 3-2. Blocks 3c consist of schemes of conversion 3c-1 and schemes of protection and coordination 3c-2. Blocks 3a consist of scheme of amplification 3a-1, amplifying and commuting element 3a-2, and resistors 3a-3. The AC signal converter also includes DC power supply sources 5.

The AC signal converter functions as follows. Block 1 with the help of scheme 1-1 generates the AC rectangular signal, and through block 1-2 the AC rectangular signal is transferred to integrated inputs 2 of cascades of amplification and conversion 3. At cascades of amplification and conversion it is transformed with the help of blocks 3c as follows: at schemes 3c-1 the AC rectangular signal is transformed in terms of duration, whereas change of duration of the AC rectangular signal is carried out according to the waveform of the specified output signal. Then AC rectangular signals are transferred to schemes 3c-2, which function in the following way: as soon as the load at one or several cascades of amplification and conversion exceeds maximum permissible level due to the difference in parameters of cascades of amplification and conversion 3 and DC power supply sources 5, the current at these cascades of amplification and conversion in this case becomes also above the maximum permissible level.

This phenomenon is due to unlimited power growth by increasing the number of cascades of amplification and conversion of the AC signal and by increasing DC power supply sources, as well as due to the voltage changes of some power supply types (batteries, accumulators) during the period of time.

As soon as the current at these cascades of amplification and conversion becomes above the maximum permissible level, current signal formed at resistors 3a-3 is transferred to schemes 3c-2. Then schemes 3c-2 reduce the AC signal in terms of duration and (or) amplitude. For this reason the current of one or several cascades of amplification and conversion is getting lower, and the load at these one or several cascades of amplification and conversion is redistributed to other cascades of amplification and conversion. If the load and the current exceed the maximum permissible level at all cascades of amplification and conversion, there start working similarly all cascades of amplification and conversion. In this case the load can not be redistributed and at the output 4 the AC signal is reduced in terms of duration and (or) amplitude.

After going through schemes 3c-2 and block 3c AC signals are transferred to block 3a consisting of schemes 3a-1, amplifying and commuting element 3a-2, and resistors 3a-3, where according to the waveform of the specified output signal they are transformed in terms of amplitude and are equally amplified in terms of power according to the Principle 1 (shown on **FIG. 1**) or are amplified in terms of power according to the Principle 2 (shown on **FIG. 1**).

The transformation in terms of amplitude is carried out according to the waveform of the specified output signal.

By means of schemes 3a-1 AC signals are conversed in terms of amplitude and are amplified in terms of power according to the Principle 1 (shown on **FIG. 1**) or are amplified in terms of power according to the Principle 2 (shown on **FIG. 1**).

Then with the help of amplifying and commuting element 3a-2 and resistors 3a-3 AC signals are amplified in terms of power and are transferred to the output 4.

At the output 4 AC signals formed at cascades of amplification and conversion 3 are summed in the specified signal. To the output 4 there is connected scheme 1-3, which is the part of the block 1.

Schemes 1-2 and 1-3 serve for stabilization of the output voltage at the output 4.

Stabilization of the output voltage at the output 4 is carried out in the following way: as soon as the output voltage at the output 4 becomes different from the specified one, the scheme 1-3 through the connection 7 sends the pilot signal to the scheme 1-2, which increases or reduces the amplitude and(or) duration of the AC signal at the united inputs 2. This leads to stabilization of the output voltage at the output 4.

Power supply of the block 1 is carried out by diodes 3-2 which are the part of cascades of amplification and conversion. These diodes 3-2 are connected to each other with anodes or cathodes 6, from which power supply of the block 1 is carried out, while the other anode or cathode of diodes 3-2 is connected to its power supply source 5, which provides no break power supply of the block 1. [0053] There can be used in a converter from one to N power supply sources, where N stands for number of cascades of amplification and conversion.

Power supply of cascades of amplification and conversion is carried out from power supply sources 5, which according to the Principle 1 (shown on **FIG. 1**) have equal or estimated voltage according to the Principle 2 (shown on **FIG. 1**). This voltage through safety devices 3-1 and switches 3-2 is transferred to the block 1. Safety devices 3-1 and switches 3-2, which are the part of cascades of amplification and conversion 3, function in the following way: switches 3-2 switch cascade or cascades of amplification and conversion 3 from broken down power supply sources 5 to the operating power supply sources 5. Meanwhile the AC signal converter remains operational. Upon increase of number of cascades of amplification and conversion their output power is summed, which gives an opportunity of unlimited growth of a device power capacity. Safety devices 3-1 disconnect the broken down cascades of amplification and conversion 3 from power supply sources 5.

If at least one of power supply sources 5 is operational, the AC signal converter remains operational.

If at least one of cascades of amplification and conversion 3 is operational, the AC signal converter remains operational, but there is power lost and the AC signal may be corrupted at the output 4.

**FIG. 2A** shows the principles of operation of a three-cascade AC signal converter with output elements (transformers), each of which is connected to its cascade of amplification and conversion and united at the output.

**FIG. 2A** includes the following elements: block 1 (generator-multivibrator) consisting of schemes 1-1, 1-2, 1-3, cascades of amplification and conversion - blocks 2 consisting of blocks of conversion 3c and blocks of amplification 3a, diodes 3-3, safety devices 3-1, and switches 3-2. Blocks 3c consist of schemes of conversion 3c-1 and schemes of protection and coordination 3c-2. Blocks 3a consist of scheme of amplification 3a-1, amplifying and commuting element 3a-2, and resistors 3a-3. The AC signal converter also includes DC power supply sources 5 and matching elements (transformers) 9.

The AC signal converter functions as follows. Block 1 with the help of scheme 1-1 generates the AC rectangular signal, and through scheme 1-2 the AC rectangular signal is transferred to united inputs 2 of cascades of amplification and conversion. At the cascades of amplification and conversion it is transformed with the help of blocks 3c as follows: at schemes 3c-1 the AC rectangular signal is transformed in terms of specified duration, whereas duration of the AC rectangular signal is specified for every cascade of amplification and conversion 3 according to the waveform of the specified output signal.

Then AC rectangular signals are transferred to schemes 3c-2, which function in the following way: as soon as the load at one or several cascades of amplification and conversion exceeds maximum permissible level due to difference in parameters of cascades of amplification and conversion 3 and DC power supply sources 5, the current at these cascades of amplification and conversion in this case becomes also above the maximum permissible level. As soon as the current at one or several cascades of amplification and conversion becomes above the maximum permissible level, the current signal formed at resistors 3a-3 is transferred to schemes 3c-2, which reduce the signal in terms of duration and (or) amplitude. For this reason the current of this one or these several cascades of amplification and conversion is getting lower, and the load at this one or these several cascades of amplification and conversion is redistributed to other cascades of amplification and conversion. If the load and the current exceed the maximum permissible level at all cascades of amplification and conversion, there start working similarly all cascades of amplification and conversion. In this case the load can not be redistributed and at the output 4 the AC signal is reduced in terms of duration and (or) amplitude.

After going through schemes 3c-2 and block 3c AC signals are transferred to block 3a consisting of schemes 3a-1, amplifying and commuting element 3a-2, and resistors 3a-3, where they are converted in terms of amplitude and equally amplified in terms of power according to the Principle 1 (shown on **FIG. 2**) or only amplified in terms of power according to the Principles 2 and 3 (shown on **FIG. 2**). By means of schemes 3a-1 AC signals are converted in terms of amplitude and amplified in terms of power according to the Principle 1 (shown on **FIG. 2**) or only amplified in terms of power according to the Principles 2 and 3 (shown on **FIG. 2**). Change of amplitude is carried out according to the waveform of the specified output signal. Then with the help of amplifying and commuting element 3a-2 and resistors 3a-3 AC signals are equally amplified in terms of power. Then AC signals through connection 8 are transferred to primary windings 10 of matching elements (transformers) 9, while secondary windings 11 of matching elements (transformers) 9 are united at the output 4. Matching elements (transformers) 9 have equal amplification (conversion) according to the Principles 1 and 3 (shown on **FIG. 2**) or different amplification (conversion) according to the Principle 2 (shown on **FIG. 2**). At the secondary windings 11 of matching elements (transformers) 9, which are united at the output 4, AC signals formed at cascades of amplification and conversion 3 are summed into the specified signal. To the output 4 there is connected scheme 1-3, which is included into block 1. Schemes 1-2 and 1-3 serve for stabilization of the output voltage at the output 4. Stabilization of the output voltage at the output 4 is carried out in the following way: as soon as output voltage at the output 4 becomes different from the specified one, scheme 1-3 through connection 7 sends pilot signal to scheme 1-2, which increases or reduces amplitude and(or) duration of the AC signal at the united inputs 2. This leads to stabilization of the output voltage at the output 4.

Power supply of block 1 is carried out by diodes 3-2 which are the part of the cascades of amplification and conversion. These diodes 3-2 are connected to each other with anodes or cathodes by connection 6, from which power supply of block 1 is carried out, while the other anode or cathode of these diodes is connected to its power supply source 5, which provides no break power supply of block 1. There can be used in the converter from one to N power supply sources, where N stands for the number of cascades of amplification and conversion.

Power supply of cascades of amplification and conversion is carried out from power supply sources 5, which have equal voltage according to the Principles 1 and 2 (shown on **FIG. 2**) or estimated voltage according to the Principle 3 (shown on **FIG. 2**). From power supply sources 5 this voltage through safety devices 3-1 and switches 3-2 is transferred to schemes 3c-1, 3c-2, and 3a-1, amplifying and commuting element 3a-2, and resistors 3a-3. Safety devices 3-1 and switches 3-2, which are the part of cascades of amplification and conversion 3, function in the following way: switches 3-2 switch cascade or cascades of amplification and conversion 3 from broken down power supply sources 5 to the operational power supply sources 5. Meanwhile AC signal converter remains operational. Upon increase of number of cascades of amplification and conversion their output power capacity is summed, which gives an opportunity of unlimited growth of a device power capacity. Safety devices 3-1 disconnect the broken down cascades of amplification and conversion 3 from power supply sources 5. If at least one of power supply sources 5 is operational, the AC signal converter remains operational. If at least one of cascades of amplification and conversion 3 is operational, the AC signal converter remains operational, but there is power lost and the AC signal may be corrupted at the output 4.

**FIG. 3A** shows the principle of operation of a three-cascade AC signal converter with a common matching output element (a transformer).

**FIG. 3A** includes the following elements: block 1 (generator-multivibrator) consisting of schemes 1-1, 1-2, 1-3, cascades of amplification and conversion - blocks 2 consisting of blocks of conversion 3c and blocks of amplification 3a, diodes 3-3, safety devices 3-1, and switches 3-2. Blocks 3c consist of schemes of conversion 3c-1 and schemes of protection and coordination 3c-2. Blocks 3a consist of scheme of amplification 3a-1, amplifying and commuting element 3a-2, and resistors 3a-3. The AC signal converter also includes DC power supply sources 5 and a matching output element (a transformer) 9.

The AC signal converter functions as follows. Block 1 with the help of scheme 1-1 generates the AC rectangular signal, and through block 1-2 the AC rectangular signal is transferred to united inputs 2 of cascades of amplification and conversion. At the cascades of amplification and conversion the AC rectangular signal is transformed with the help of blocks 3c as follows: at schemes 3c-1 the AC rectangular signal is transformed in terms of specified duration. Change of duration of the AC rectangular signal is carried out according to the waveform of the specified output signal. Then AC rectangular signals are transferred to schemes 3c-2, which function the following way: if due to possible difference in parameters of cascades of amplification and conversion 3 and DC power supply sources 5 the load at one or several cascades of amplification and conversion exceeds maximum permissible level, current in this case becomes also above the maximum permissible level.

As soon as the current at these cascades of amplification and conversion becomes above the maximum permissible level, current signal formed at resistors 3a-3 is transferred to schemes 3c-2. Then schemes 3c-2 reduce the signal in terms of duration and (or) amplitude. For this reason the current of this one or these several cascades of amplification and conversion is getting lower, and the load at this one or these several cascades of amplification and conversion is redistributed to other cascades of amplification and conversion. If the load and the current exceed the maximum permissible level at all cascades of amplification and conversion, there start working similarly all cascades of amplification and conversion. In this case the load can not be redistributed and at the output 4 the AC signal is reduced in terms of duration and (or) amplitude.

After going through schemes 3c-2 AC signals come to block 3a consisting of schemes 3a-1, amplifying and commuting element 3a-2, and resistors 3a-3, where they are transformed in terms of amplitude and equally are amplified in terms of power according to the Principle 1 (shown on **FIG. 3**) or only are amplified in terms of power according to the Principles 2 and 3 (shown on **FIG. 3**). By means of schemes 3a-1 AC signals are converted in terms of amplitude and are amplified in terms of power according to the Principle 1 (shown on **FIG. 3**). Whereas, the change of the AC signal amplitude is carried out according to the waveform of the specified output signal. Then with the help of amplifying and commuting element 3a-2 and resistors 3a-3 AC signals are equally amplified in terms of power. Then AC signals through connection 8 are transferred to primary windings 10 of matching element (a transformer) 9, while secondary winding of matching element (a transformer) 9 is connected to the output 4. The matching element (a transformer) 9 has equal number of winds at primary winding 10 according to the Principles 1 and 3 (shown on **FIG**. **3**) or estimated number of winds according to the waveform of the output signal following the Principle 2 (shown on **FIG. 3**). At the secondary winding 11 of matching element (transformer) 9 and at the output 4 AC signals formed at cascades of amplification and conversion 3 are summed into a signal of any specified or close to any specified waveform. To the output 4 there is connected scheme 1-3, which is the part of block 1. Schemes 1-2 and 1-3 serve for stabilization of output voltage at the output 4. Stabilization of the output voltage at the output 4 is carried out in the following way: as soon as the output voltage at the output 4 becomes different from the specified one, scheme 1-3 through connection 7 sends pilot signal to scheme 1-2, which increases or reduces amplitude and(or) duration of AC signal at the united inputs 2. This leads to stabilization of the output voltage at the output 4.

Power supply of block 1 is carried out by diodes 3-2 which are the part of cascades of amplification and conversion. These diodes 3-2 are connected to each other by anodes or cathodes by connection 6, from which power supply of block 1 is carried out, while the other anode or cathode of diodes 3-2 is connected to its power source 5, which provides no break power supply of block 1. There can be used in converter from one to N power supply sources, where N stands for the number of cascades of amplification and conversion.

Power supply of cascades of amplification and conversion is carried out from power supply sources 5, which have equal voltage according to the Principles 1 and 2 (shown on **FIG. 3**) or estimated voltage according to the waveform of specified output signal following the Principle 3 (shown on **FIG. 3**). From power supply sources 5 this voltage through safety devices 3-1 and switches 3-2 is transferred to schemes 3c-1, 3c-2, and 3a-1, amplifying and commuting element 3a-2, and resistor 3a-3. Safety devices 3-1 and switches 3-2, which are the part of cascades of amplification and conversion3, function the following way: switches 3-2 switch cascade or cascades of amplification and conversion 3 from broken down power supply sources 5 to the operational power supply sources 5. Meanwhile the AC signal converter remains operational. Upon the increase of the number of cascades of amplification and conversion their output power capacity is summed, which gives an opportunity of unlimited growth of a device power capacity. Safety devices 3-1 disconnect the broken down cascades of amplification and conversion 3 from power supply sources 5. If at least one of power supply sources 5 is operational, the AC signal converter remains operational. If at least one cascade of amplification and conversion 3 is operational, the AC signal converter remains operational, but there is power lost and the AC signal may be corrupted at the output 4.

**FIG. 4** shows conversion and amplification of the AC signal.

**FIG. 4** a gives views of the AC rectangular signal at the integrated inputs 2 of cascades of amplification and conversion.

**FIG. 4 b, FIG. 4 c, FIG. 4 d** give views of AC rectangular signals at connection 8 of cascades of amplification and conversion.

**FIG. 4** **e** and **FIG. 4** **f** give views of the AC signal at the output 4 of cascades of amplification and conversion.

## Claims

1. The AC signal converter, which includes N paralleled amplification and conversion of the AC signal, where N is the natural number (N≥2), which has two or more DC power supply sources, each of which serve as power supply units for its individual cascade of amplification and conversion of the AC signal, **characterized in that** the AC signal converter has a direct (immediate) connection of the load with the output and includes N number (N>1) of connected in parallel cascades of amplification and conversion of the AC signal from rectangular signal into the signal of any specified waveform as well as two and more DC power supply sources each of which serves as the power supply unit of its individual cascade of amplification and conversion of the AC signal.

2. The AC signal converter according to claim 1, wherein the AC rectangular signal is transformed in terms of duration and amplitude at cascades of amplification and conversion, and at the output and/or at the matching output element AC signals generated at cascades of amplification and conversion are summed in a signal of any specified or close to specified form, while change of duration and amplitude at cascades of amplification and conversion is carried out according to the form of the specified output signal.

3. The AC signal converter according to claim 1 or 2, wherein the matching output element (a transformer) at primary windings connected to cascades of amplification and conversion has number of winds which is estimated according to the form of the specified output signal, whereas at cascades of amplification and conversion AC signal according to the form of the specified output signal is transformed in terms of duration, then at the matching output element (a transformer) AC signals generated at cascades of amplification and conversion are summed into a signal of any specified or close to the specified form.

4. The AC signal converter according to claim 1 or 2, wherein that each cascade of amplification and conversion has power voltage specified according to the form of the output signal, while each cascade of amplification and conversion according to the form of the specified output signal transforms the AC rectangular signal in terms of duration, then at the output and/or at the matching output element AC signals generated at cascades of amplification and conversion are summed into a signal of any specified or close to the specified form.

5. The AC signal converter according to claim 1 or 2, wherein two or more cascades of amplification of AC signal are executed with a transformer output or other output excluding direct contact of outputs of cascades of amplification and conversion each other.

6. The AC signal converter according to claim 1, wherein there are input schemes of protection and conformation of AC signal converter which automatically redistribute total load to cascades of amplification and conversion and compensate difference in parameters of cascades of amplification and conversion and power sources.

7. The AC signal converter according to claim 1, wherein each cascade of amplification and conversion can receive power from both separate DC power source and/or common DC power source with any single or several or all cascades of amplification and conversion, whereas in the converter there can be used one or more DC power sources, the number of which is equal to the number of cascades of amplification and conversion.

8. The AC signal converter according to claim 1 or 2, wherein that matching output elements (transformers) have estimated signal amplification (transformation) according to the form of specified output between primary windings and secondary winding(s), while at each cascade of amplification and conversion the AC rectangular signal is transformed in terms of duration, whereas the transformation in terms of duration is carried out according to the form of the specified output signal, after which at the matching output elements (transformers) AC rectangular signals generated at cascades of amplification and conversion are summed into a signal of any specified or close to the specified form.
